# FASCICULE DE BREVET EUROPEEN

(11) **EP 3 048 937 B1**
(45) Date de publication et mention de la délivrance du brevet: **18.09.2019**
(21) Numéro de dépôt: 14790204.3
(22) Date de dépôt: 24.09.2014
(51) Int. Cl.: A47J 31/30, A47J 31/053

(54) **APPAREIL DE PRODUCTION DE BOISSON INFUSÉE EQUIPÉ D'UN DISPOSITIF DE RÉCUPÉRATION DE VAPEUR**
VORRICHTUNG ZUR HERSTELLUNG EINES AUFGUSSGETRÄNKS MIT EINER DAMPFWIEDERHERSTELLUNGSVORRICHTUNG
APPARATUS FOR PRODUCING AN INFUSED BEVERAGE PROVIDED WITH A STEAM-RECOVERY DEVICE

(30) Priorité: 27.09.2013 FR 1359372
(43) Date de publication de la demande: 03.08.2016
(73) Titulaire: SEB S.A., 69130 Ecully (FR)
(72) Inventeur: MORIN, Gilles, 21490 Varois et Chaignot (FR)
(74) Mandataire: Bourrières, Patrice
(86) Numéro de dépôt international: PCT/FR2014/052386
(87) Numéro de publication internationale: WO 2015/044583

(56) Documents cités:
- EP-A1- 1 095 604
- WO-A1-2010/041003
- US-A- 3 469 522
- US-A- 5 473 974

## Description

La présente invention concerne un appareil de production de boisson infusée tel que, par exemple, une cafetière ou une théière. De manière traditionnelle, un tel appareil de production de boisson infusée comprend une verseuse, une chambre de mélange et un dispositif de chauffe. La verseuse permet de contenir la boisson infusée. Dans certain cas, selon la conception de l'appareil, cette verseuse permet également de contenir l'eau ou tout autre liquide servant à la préparation de cette boisson infusée. La chambre de mélange est configurée pour contenir un produit à infuser, notamment de la poudre de café ou du thé. Cette chambre de mélange est également configurée pour filtrer ou laisser s'écouler la boisson infusée dans la verseuse, après infusion du produit dans le liquide chaud. Le dispositif de chauffe est configuré pour injecter dans la chambre de mélange le liquide en provenance d'un réservoir annexe ou directement de la verseuse - selon la conception de l'appareil - après avoir chauffé ou réchauffé ce liquide.

A titre d'exemple, de tels appareils de production de boisson infusée sont décrits dans les brevets publiés sous les numéros suivants : GB 604 320 A, US 2 824 509 A, US 5 473 974 A et EP 1 095 604 A1.

La présente invention a pour objet principal d'améliorer la qualité de la boisson infusée tant du point de vue de sa saveur que de sa température au moment d'être dégustée.

A cet effet, l'invention concerne un appareil de production de boisson infusée qui, comme les diverses conceptions connues selon l'art antérieur, comprend une verseuse configurée pour au moins contenir la boisson infusée, une chambre de mélange configurée pour contenir un produit à infuser et pour laisser s'écouler la boisson infusée dans la verseuse, et un dispositif de chauffe configuré pour injecter un liquide dans la chambre de mélange après l'avoir chauffé. Selon les diverses conceptions envisageables de l'appareil selon l'invention, celui-ci comprend un réservoir de stockage du liquide servant à la préparation de la boisson infusée distinct de la verseuse ou, au contraire, constitué par ladite verseuse.

L'appareil comprend un dispositif de récupération de vapeur qui est configuré pour évacuer la vapeur générée par le liquide chaud et contenue dans la chambre de mélange au-dessus du produit à infuser. En outre, la configuration du dispositif de récupération de vapeur permet d'injecter ladite vapeur dans la verseuse sans que cette vapeur ne traverse le produit à infuser.

De manière remarquable, selon l'invention, le dispositif de récupération de vapeur est constitué d'un couvercle configuré pour obturer la chambre de mélange. En outre, le couvercle comprend au moins un canal de guidage de la vapeur qui comporte au moins une entrée configurée pour communiquer avec la chambre de mélange et au moins une sortie configurée pour communiquer avec la verseuse.

Selon cette conception, on évite tout d'abord que la vapeur vienne directement sur le produit à infuser, par exemple la mouture du café, et dégrade la saveur de celui-ci en lui donnant un goût de brûlé. Ensuite, on canalise la vapeur vers la verseuse, à l'extérieur de la chambre de mélange, ce qui permet pour le moins de réchauffer la boisson infusée contenu dans cette verseuse pour les appareils dont le réservoir de liquide servant à la préparation de la boisson infusée est distinct de la verseuse. Pour le cas des appareils dont la verseuse permet également de contenir le liquide servant à la préparation de la boisson infusée, cette conception selon l'invention permet de réchauffer également ledit liquide avant qu'il ne soit chauffé puis injecté dans la chambre de mélange par le dispositif de chauffe. Cela permet de réduire le temps de chauffe du liquide par le dispositif de chauffe et, par conséquent, réduit le temps du cycle de préparation de la boisson infusée et la consommation d'énergie de l'appareil.

Cette conception permet de canaliser la totalité de la vapeur injectée dans la chambre de mélange par le dispositif de chauffe, en sorte de l'évacuer de cette chambre de mélange et de la réinjecter dans la verseuse.

Dans un mode de réalisation de l'appareil de production de boisson infusée objet de l'invention, la verseuse comprend un bec verseur. En outre, le dispositif de récupération de vapeur est configuré pour injecter la vapeur dans la verseuse par ledit bec verseur. Cela permet non seulement de réchauffer le liquide contenu dans la verseuse mais, également, d'éviter que des calories ne s'échappent par le bec verseur qui reste ouvert pendant la production de la boisson. On peut bien entendu envisager d'injecter la vapeur dans la verseuse différemment, en particulier lorsque l'appareil de production de boisson infusée selon l'invention est équipé d'un clapet d'obturation du bec verseur.

Dans un mode de réalisation de l'appareil de production de boisson infusée objet de l'invention, le dispositif de récupération de vapeur comprend un système de réglage configuré pour contrôler la quantité de vapeur injectée dans la verseuse. Ainsi, le système de réglage peut être réglé pour injecter dans la verseuse la totalité de la vapeur produite et provenant de la chambre de mélange, ce qui permet d'obtenir un rendement optimal de l'appareil avec une boisson infusée plus chaude voire un temps de cycle plus court selon la configuration de l'appareil. A l'inverse, le système de réglage peut être réglé pour ne pas injecter de vapeur dans la verseuse, ce qui permet d'obtenir un rendement minimal de l'appareil avec une boisson infusée moins chaude, voire un temps de cycle plus long selon la configuration de l'appareil. Il est donc possible de moduler la température de la boisson infusée qui est préparée, ce qui permet au consommateur de déguster cette boisson à une température adaptée à sa convenance.

De préférence, cet au moins un canal de guidage comporte une sortie qui communique avec le bec verseur.

Selon ce mode de réalisation de l'appareil de production de boisson infusée, dans une variante équipée du système de réglage précité, ledit système de réglage est agencé sur l'au moins un canal de guidage de la vapeur.

Selon ce mode de réalisation précité de l'appareil de production de boisson infusée, de manière préférentielle, le système de réglage comprend une ouverture agencée sur l'au moins un canal de guidage de la vapeur et configurée pour déboucher sur l'extérieur, un obturateur ou une languette configurés pour fermer l'ouverture et des moyens de réglage de la position de l'obturateur vis-à-vis de l'ouverture configurés pour fermer plus ou moins ladite ouverture. Ainsi lorsque l'obturateur est réglé en position de fermeture totale de l'ouverture, toute la vapeur s'évacuant de la chambre de mélange est injectée dans la verseuse. Au contraire, lorsque l'obturateur est réglé en position de dégagement total de l'ouverture, la vapeur s'évacuant de la chambre de mélange est éjectée en quasi-totalité vers l'extérieur, une infime quantité de vapeur pouvant être injectée tout de même dans la verseuse. Entre ces deux positions précitées de l'obturateur, la quantité de vapeur injectée dans la verseuse et celle éjectée vers l'extérieur sont modulées selon le réglage effectué.

Dans un mode de réalisation de l'appareil de production de boisson infusée selon l'invention, un système d'encliquetage est agencé entre le couvercle et la chambre de mélange. Ce système d'encliquetage est configuré pour assembler de manière amovible le couvercle avec la chambre de mélange. Cette conception permet de retirer facilement le couvercle et la chambre de mélange vis-à-vis de la verseuse, puis de séparer le couvercle vis-à-vis de la chambre de mélange, pour son remplissage en produit à infuser ou, inversement, son vidage.

Dans un mode de réalisation de l'appareil de production de boisson infusée objet de l'invention, la verseuse comprend une ouverture principale agencée en partie supérieure. En outre, ce couvercle est configuré pour obturer également ladite ouverture principale. Cela évite une perte de calorie au niveau de l'ouverture principale. Cette ouverture principale sert également au remplissage en liquide de la verseuse lorsque celle-ci constitue le réservoir de stockage du liquide.

Selon ce mode de réalisation de l'appareil de production de boisson infusée, un système d'assemblage est agencé entre le couvercle et l'ouverture principale de la verseuse, ledit système d'assemblage étant configuré pour être escamoté. Cela permet le maintien convenable du couvercle sur la verseuse et facilite en outre son retrait.

Dans un mode de réalisation préférentiel de l'appareil de production de boisson infusée objet de l'invention, le dispositif de chauffe est intégré à la verseuse et communique avec celle-ci, ladite verseuse constituant initialement le réservoir à eau. On peut toutefois envisager des variantes avec un réservoir de stockage à eau distinct de la verseuse, sans sortir du cadre de l'invention.

Selon ce mode de réalisation de l'appareil de production de boisson infusée, le dispositif de chauffe comprend une colonne de remontée du liquide chauffé et la chambre de mélange comprend un récipient filtrant muni d'un fond. La colonne traverse de manière étanche le fond et a son extrémité supérieure positionnée en partie supérieure du récipient.

Les caractéristiques et avantages de la présente invention apparaîtront à la lecture de la description suivante d'un mode de réalisation préférentielle, laquelle s'appuie sur des figures parmi lesquelles :
- La figure 1 illustre en perspective un appareil de production de boisson infusée ;
- La figure 2 illustre une vue en plan de la figure 1, selon un plan coupe longitudinal ;
- Les figures 3 et 4 illustrent deux vues partielles en plan de la figure 1, selon deux plans de coupe longitudinal et transversal, mettant en évidence une verseuse, une chambre de mélange et un couvercle ;
- Les figures 5 et 6 illustrent en perspective la chambre de mélange et le couvercle et mettent en évidence un système de réglage de la quantité de vapeur injectée dans la verseuse ;
- La figure 7 illustre une vue en plan de la figure 5, selon un plan de coupe transversal.

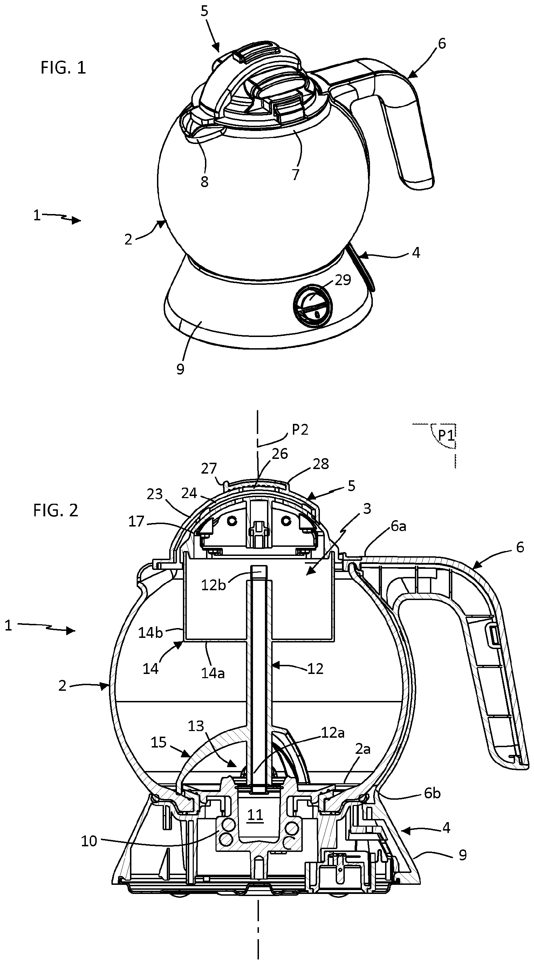

Tel qu'illustré sur les figures 1 et 2, l'appareil de production de boisson infusée, dénommé l'appareil 1 dans la suite de la description, comprend une verseuse 2, une chambre de mélange 3, un dispositif de chauffe 4, un couvercle 5 et une poignée de manipulation 6.

La verseuse 2 présente préférentiellement une forme sphérique. Cette verseuse 2 est munie d'une ouverture principale 7 agencée en partie supérieure et d'un bec verseur 8 agencé sur le bord supérieur de cette ouverture principale 7, du côté opposé à la poignée de manipulation 6. Cette verseuse 2 est assujettie de manière étanche au-dessus du corps 9 du dispositif de chauffe 4, la poignée de manipulation 6 étant fixée en sa partie supérieure 6a, au bord de l'ouverture principale 7 et en sa partie inférieure 6b, au corps 9.

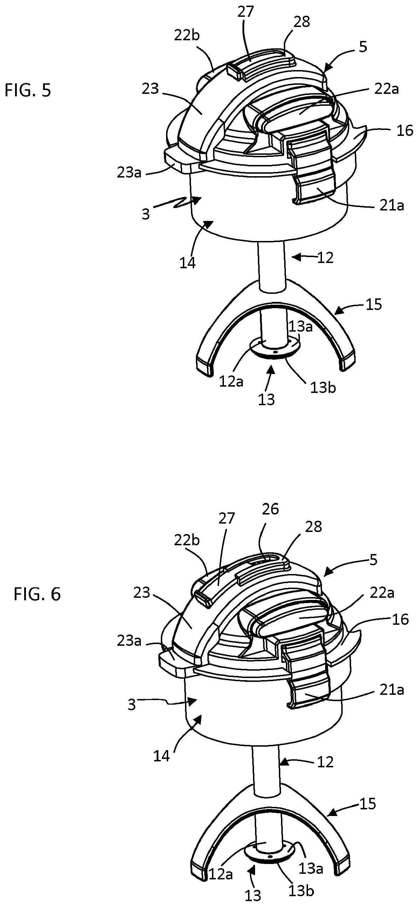

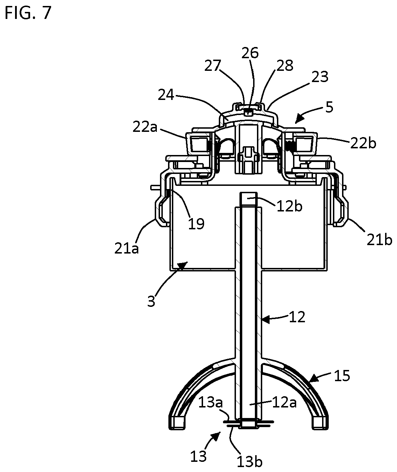

Le dispositif de chauffe 4 comprend un élément de chauffe 10 qui définit une enceinte 11 communiquant avec l'intérieur de la verseuse 2 et permettant de recevoir du liquide contenu dans cette verseuse 2 en sorte de le chauffer au moyen de l'élément de chauffe 10. Le dispositif de chauffe 4 comprend également une colonne 12 de remontée d'eau dont l'extrémité inférieure 12a communique avec l'enceinte 11. Un système d'ouverture 13, constitué de deux rondelles 13a, 13b illustrées notamment en figures 5 à 7, est agencé à l'extrémité inférieure 12a de la colonne 12 et permet d'ouvrir ou de fermer de manière étanche le passage entre l'enceinte 11 et la verseuse 2, sous l'action d'une pression générée par l'ébulition du liquide dans l'enceinte 11. La pression générée dans l'enceinte 11 de l'élément de chauffe 10 permet à l'eau chaude de monter dans la colonne 12. Le système d'ouverture 13 est assujetti à cette extrémité inférieure 12a et est amovible vis-à-vis de l'enceinte 11, ce qui permet le dégagement de la colonne 12.

Tel qu'illustré en figure 2, la chambre de mélange 3 est constituée d'un récipient 14 cylindrique qui comporte un fond 14a. La colonne 12 du dispositif de chauffe 4 passe au travers de ce fond 14a de manière étanche, l'extrémité supérieure 12b de la colonne 12 étant positionnée en partie supérieure du récipient 14, dans cette chambre de mélange 3. Le fond 14a est poreux en sorte de constituer une paroi filtrante. De préférence, le contour 14b du récipient 14 est également poreux en sorte de constituer aussi une paroi filtrante.

Tel qu'illustré sur les figures 2 à 7, la colonne 12 et le récipient 14 sont constitués d'une même pièce, ce qui garantit l'étanchéité entre ces éléments et assure ainsi une parfaite filtration de la boisson infusée. Cela facilite également le retrait du récipient 14 pour son remplissage en produit à infuser ou le vidage de ce produit après infusion, sans devoir le dégager vis-à-vis de la colonne 12 qui est retirée concomitamment audit récipient 14. La partie inférieure de la colonne 12 comprend un trépied 15 permettant de repositionner convenablement le système d'ouverture 13 dans le fond 2a de la verseuse 2, en vis-à-vis de l'enceinte 11, lors de la mise en place du récipient 14. Ce trépied 15 assure également une stabilité de l'ensemble.

Le côté longitudinal est défini par le plan P1 passant par la poignée de manipulation 6 et par le bec verseur 8. De même, le côté transversal est défini par le plan P2 perpendiculaire à P1. Ces plans P1 et P2 sont illustrés sur les figures 2 à 4.

Tel qu'illustré sur les figures 1 à 7, le couvercle 5 comprend une paroi operculaire 16 qui permet la fermeture de l'ouverture principale 7 de la verseuse 2 lors de sa mise en place sur cette dernière. Le couvercle 5 comprend également une paroi interne 17 dont l'extrémité périphérique 17a présente une gorge circulaire 18 dans laquelle vient se loger le bord périphérique supérieur 14c du récipient 14, ce qui permet au couvercle 5 de fermer de manière étanche la chambre de mélange 3. Un système d'encliquetage (non illustré) est agencé entre l'extrémité périphérique 17a et un contour périphérique supérieur 19 du récipient 14. Ce système d'encliquetage peut consister en des pattes agencées sur l'extrémité périphérique 17a et munies de griffes internes qui s'encliquètent sur des bourrelets externes agencés sur le contour périphérique supérieur 19. Ainsi le retrait du couvercle 5 vis-à-vis de la verseuse 2 permet concomitamment de retirer le récipient 14 et la colonne 12.

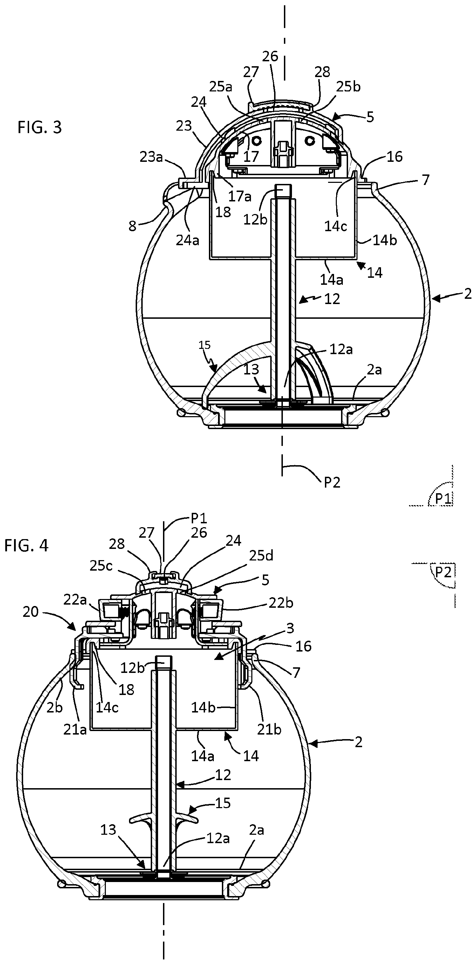

Un système d'assemblage 20 est agencé entre le couvercle 5 et la verseuse 2, tel qu'illustré notamment en figure 4. Ce système d'assemblage 20 est constitué de deux pinces 21a, 21b agencées sur le couvercle 5 dans le sens transversal. L'écartement de ces pinces 21a, 21b est activé au moyen de deux boutons de commande 22a, 22b et d'un mécanisme de transmission agencé entre lesdites pinces 21a, 21b et lesdits boutons de commande 22a, 22b. En position écartée, ces pinces 21a, 21b se plaquent contre la paroi interne supérieure 2b de la verseuse 2, lorsque le couvercle 5 ferme l'ouverture principale 7, ce qui immobilise ledit couvercle 5 vis-à-vis de la verseuse 2 et, par conséquent, le récipient 14 et la colonne 12. Dans la position escamotée de ces pinces 21a, 21b, le couvercle 5 peut être retiré de la verseuse 2.

Tel qu'illustré sur les figures 1 à 7, le couvercle 5 comprend une paroi externe 23 qui est agencée dans le sens longitudinal et positionnée avec un espacement par rapport à la paroi interne 17, ce qui permet de définir un canal de guidage 24. Ce canal de guidage 24 débouche au niveau de l'extrémité 23a de la paroi externe 23 qui est agencée au-dessus du bec verseur 8. Ainsi, le canal de guidage 24 débouche au niveau de sa sortie 24a, dans le bec verseur 8. La paroi interne 17 comprend des orifices d'entrée 25a, 25b, 25c, 25d répartis au-dessus du récipient 14 et débouchant dans le canal de guidage 24. Ces orifices d'entrée 25a, 25b, 25c, 25d, permettent d'évacuer dans le canal de guidage 24, la vapeur émanant du liquide chaud qui est éjecté de l'extrémité supérieure 12b de la colonne 12, cette vapeur se situant en partie supérieure de la chambre de mélange 3, au-dessus du produit à infuser sur lequel se déverse le liquide chaud. Cette vapeur située dans le canal de guidage 24 est alors éjectée au niveau de la sortie 24a et pénètre directement dans la verseuse 2, par le bec verseur 8.

Tel qu'illustré sur les figures 1 à 7, la paroi externe 23 comprend une lumière 26 qui est agencée dans le sens longitudinal au-dessus du canal de guidage 24. Cette lumière 26 permet d'évacuer la vapeur vers l'extérieur de l'appareil 1. En outre, une languette 27 - appelée aussi obturateur - est montée à coulissement dans une rainure de guidage 28, au-dessus de la lumière 26, ce qui permet d'obturer ladite lumière 26 pour favoriser une évacuation de la vapeur vers le bec verseur 8 et non vers l'extérieur de l'appareil 1. Le montage coulissant de la languette 27 sur la rainure de guidage 28 permet de régler la position d'obturation de la lumière 26, ce qui permet d'évacuer plus ou moins de vapeur vers le bec verseur 8 ou vers l'extérieur de l'appareil 1. Lorsque la languette 27 obture complètement la lumière 26, tel qu'illustré en figure 5, toute la vapeur est évacuée vers le bec verseur 8, ce qui favorise une augmentation de la température du liquide contenu dans la verseuse 2. Lorsque la languette 27 libère complètement la lumière 26, tel qu'illustré en figure 6, cela favorise l'évacuation de la vapeur vers l'extérieur de l'appareil 1 ; la température du liquide, puis de la boisson infusée, est alors essentiellement générée par le dispositif de chauffe 4.

L'appareil 1 sera utilisé notamment pour la préparation d'une boisson de café voire de thé. L'actionnement des boutons de commande 22a, 22b permet d'escamoter les pinces 21a, 21b puis d'extraire de la verseuse 2, l'ensemble couvercle 5, récipient 14 et colonne 12. La séparation du couvercle 5 et du récipient 14 s'effectue en décliquetant lesdits éléments, ce qui permet ensuite de repositionner le récipient 14 et la colonne 12 dans la verseuse 2 après avoir empli cette dernière en eau. Le produit à infuser est ensuite disposé dans le récipient 14 avant le repositionnement du couvercle 5 qui s'encliquète à nouveau sur le récipient 14. L'actionnement des boutons de commande 22a, 22b permet alors de plaquer les pinces 21a, 21b, sur la paroi interne 2b de la verseuse 2, ce qui immobilise l'ensemble. Le réglage de la languette 27 permet ensuite de choisir une préparation de boisson infusée plus ou moins chaude. L'allumage de l'appareil 1 par l'activation d'un bouton 29, illustré en figure 1, permet alors de démarrer le cycle de préparation. Le système d'ouverture 13 autorise le passage de l'eau contenu dans la verseuse 2 vers l'enceinte 11 qui n'est pas sous pression initialement. Au contraire, lorsque l'eau dans l'enceinte 11 est à une température proche de 100°C, le système d'ouverture 13 ferme le passage et l'eau chaude est expulsée via la colonne 12 dans la chambre de mélange 3. L'eau chaude se mélange avec le produit à infuser puis le liquide infusé est filtré par le récipient 14 avant de se déverser dans la verseuse 2. Concomitamment, la vapeur généré par l'eau chaude monte dans la chambre de mélange 3, à sa sortie de l'extrémité supérieure 12b de la colonne 12, puis traverse les orifices d'entrée 25a, 25b, 25c, 25d pour se retrouver positionnée dans le canal de guidage 24. En fonction du réglage de la languette 27, la vapeur sort plus ou moins par la sortie 24a, pour être injectée dans la verseuse, ou par la lumière 26, pour être évacuée vers l'extérieur de l'appareil 1. La vapeur qui est injectée dans la verseuse 2 réchauffe le liquide et évite la perte de calorie par le bec verseur 8. Le cycle se répète ainsi de suite, le réchauffement du liquide dans la verseuse 2 permettant de réduire le temps de chauffe dans l'enceinte 11, ce qui permet de réduire le temps de préparation global de la boisson infusée. Un thermostat permet l'arrêt automatique de l'appareil 1. La boisson est alors prête à déguster.

Des variantes de mise en oeuvre de l'appareil 1 sont envisageables s'en sortir du cadre de l'invention. A titre d'exemple, il serait possible de disposer d'un réservoir de stockage de l'eau servant à la préparation de la boisson infusée, distinct de la verseuse 2. Dans ce cas, le dispositif de chauffe 4 serait configuré pour puiser l'eau du réservoir de stockage et déverser la boisson infusée dans la verseuse. L'injection de la vapeur dans la verseuse 2 par le bec verseur 8 aurait alors pour fonction uniquement d'éviter une perte de calorie et de réchauffer la boisson infusée dans la verseuse 2, ce qui permettrait également de déguster la boisson plus chaude qu'avec un appareil traditionnel. On pourrait également envisager de positionner différemment la sortie 24a du canal de guidage 24 pour injecter la vapeur dans la verseuse 2, sans passer par le bec verseur 8, en particulier pour un appareil 1 muni d'un clapet de fermeture du bec verseur 8. On pourrait aussi envisager plusieurs sorties 24a sur le canal de guidage 24.

## Revendications

1. Appareil (1) de production de boisson infusée comprenant une verseuse (2) configurée pour contenir au moins la boisson infusée, une chambre de mélange (3) configurée pour contenir un produit à infuser et pour laisser s'écouler la boisson infusée dans la verseuse (2) et un dispositif de chauffe (4) configuré pour injecter un liquide dans la chambre de mélange (3) après l'avoir chauffé, **caractérisé en ce que** ledit appareil (1) comprend un dispositif de récupération de vapeur configuré pour évacuer la vapeur contenue dans la chambre de mélange (3) au-dessus du produit à infuser et injecter ladite vapeur dans la verseuse (2) sans que ladite vapeur ne traverse le produit à infuser et **en ce que** le dispositif de récupération de vapeur est constitué d'un couvercle (5) configuré pour obturer la chambre de mélange (3), le couvercle comprenant au moins un canal de guidage (24) de la vapeur, ledit au moins un canal de guidage de la vapeur comportant au moins une entrée (25a, 25b, 25c, 25d) configurée pour communiquer avec la chambre de mélange (3) et au moins une sortie (24a) configurée pour communiquer avec la verseuse (2).

2. Appareil (1) de production de boisson infusée selon la revendication 1, **caractérisé en ce que** la verseuse (2) comprend un bec verseur (8), le dispositif de récupération de vapeur étant configuré pour injecter la vapeur dans la verseuse (2) par ledit bec verseur (8).

3. Appareil (1) de production de boisson infusée selon l'une des revendications 1 ou 2, **caractérisé en ce que** le dispositif de récupération de vapeur comprend un système de réglage (26, 27, 28) configuré pour contrôler la quantité de vapeur injectée dans la verseuse (2).

4. Appareil (1) de production de boisson infusée selon la revendication 3 **caractérisé en ce que** le dispositif de récupération de vapeur comprend un système de réglage (26, 27, 28) configuré pour contrôler la quantité de vapeur injectée dans la verseuse (2) et **en ce que** le système de réglage (26, 27, 28) est agencé sur l'au moins un canal de guidage (24) de la vapeur.

5. Appareil (1) de production de boisson infusée selon la revendication 4, **caractérisé en ce que** le système de réglage comprend une ouverture (26) agencée sur l'au moins un canal de guidage (24) de la vapeur et configurée pour déboucher sur l'extérieur, un obturateur (27) configuré pour fermer l'ouverture et des moyens de réglage (28) de la position de l'obturateur vis-à-vis de l'ouverture configurés pour fermer plus ou moins ladite ouverture.

6. Appareil (1) de production de boisson infusée selon l'une quelconque des revendications 2 à 5, **caractérisé en ce que** l'au moins un canal de guidage (24) comporte une sortie (24a) qui communique avec un bec verseur (8).

7. Appareil (1) de production de boisson infusée selon l'une des revendications précédentes, **caractérisé en ce que** un système d'encliquetage est agencé entre le couvercle (5) et la chambre de mélange (3), ledit système d'encliquetage étant configuré pour assembler de manière amovible le couvercle avec la chambre de mélange.

8. Appareil (1) de production de boisson infusée selon l'une des revendications précédentes, **caractérisé en ce que** la verseuse (2) comprend une ouverture principale (7) agencée en partie supérieure, le couvercle (5) étant configuré pour obturer également ladite ouverture principale.

9. Appareil (1) de production de boisson infusée selon la revendication 8, **caractérisé en ce que** un système d'assemblage (21a, 21b, 22a, 22b) est agencé entre le couvercle (5) et l'ouverture principale (7) de la verseuse (2), ledit système d'assemblage étant configuré pour être escamoté.

10. Appareil (1) de production de boisson infusée selon l'une des revendications 1 à 9, **caractérisé en ce que** le dispositif de chauffe (4) est intégré à la verseuse (2) et communique avec celle-ci, ladite verseuse constituant initialement un réservoir à eau.

11. Appareil (1) de production de boisson infusée selon la revendication 10, **caractérisé en ce que** le dispositif de chauffe (4) comprend une colonne (12) de remontée du liquide chauffé et la chambre de mélange (3) comprend un récipient (14) filtrant muni d'un fond (14a), ladite colonne traversant de manière étanche le fond et ayant son extrémité supérieure (12b) positionnée en partie supérieure du récipient.

## Patentansprüche

1. Gerät (1) zur Herstellung von einem aufgegossenen Getränk, umfassend eine Kanne (2), die konfiguriert ist, um mindestens das aufgegossene Getränk zu enthalten, eine Mischkammer (3), die konfiguriert ist, um ein aufzugießendes Produkt zu enthalten und das aufgegossene Getränk in die Kanne (2) fließen zu lassen, und eine Heizvorrichtung (4), die konfiguriert ist, um eine Flüssigkeit in die Mischkammer (3) zu injizieren, nachdem sie sie erhitzt hat, **dadurch gekennzeichnet, dass** das Gerät (1) eine Dampfrückgewinnungsvorrichtung umfasst, die konfiguriert ist, um den Dampf zu evakuieren, der in der Mischkammer (3) über dem aufzugießenden Produkt enthalten ist, und den Dampf in die Kanne (2) zu injizieren, ohne dass der Dampf durch das zu aufzugießende Produkt hindurchtritt, und dass die Dampfrückgewinnungsvorrichtung aus einem Deckel (5) besteht, der konfiguriert ist, um die Mischkammer (3) zu verschließen, wobei der Deckel mindestens einen Kanal zur Führung (24) von Dampf umfasst, wobei der mindestens eine Kanal zur Führung von Dampf mindestens einen Einlass (25a, 25b, 25c, 25d), der konfiguriert ist, um mit der Mischkammer (3) in Verbindung zu stehen, und mindestens einen Auslass (24a) aufweist, der konfiguriert ist, um mit der Kanne (2) in Verbindung zu stehen.

2. Gerät (1) zur Herstellung von einem aufgegossenen Getränk nach Anspruch 1, **dadurch gekennzeichnet, dass** die Kanne (2) eine Tülle (8) umfasst, wobei die Dampfrückgewinnungsvorrichtung konfiguriert ist, um den Dampf in die Kanne (2) durch die Tülle (8) zu injizieren.

3. Gerät (1) zur Herstellung von einem aufgegossenen Getränk nach einem der Ansprüche 1 oder 2, **dadurch gekennzeichnet, dass** die Dampfrückgewinnungsvorrichtung ein Einstellsystem (26, 27, 28) umfasst, das konfiguriert ist, um die Menge an Dampf einzustellen, die in die Kanne (2) injiziert wird.

4. Gerät (1) zur Herstellung von einem aufgegossenen Getränk nach Anspruch 3, **dadurch gekennzeichnet, dass** die Dampfrückgewinnungsvorrichtung ein Einstellsystem (26, 27, 28) umfasst, das konfiguriert ist, um die in die Kanne (2) injizierte Menge von Dampf einzustellen, und dass das Einstellsystem (26, 27, 28) an dem mindestens einen Kanal zur Führung (24) von Dampf angeordnet ist.

5. Gerät (1) zur Herstellung von einem aufgegossenen Getränk nach Anspruch 4, **dadurch gekennzeichnet, dass** das Einstellsystem eine Öffnung (26), die an dem mindestens einen Kanal zur Führung (24) von Dampf angeordnet und so konfiguriert ist, dass sie sich nach außen öffnet, einen Verschluss (27), der zum Schließen der Öffnung konfiguriert ist, und Mittel (28) zum Einstellen der Position des Verschlusses in Bezug auf die Öffnung umfasst, die konfiguriert sind, um die Öffnung mehr oder weniger zu schließen.

6. Gerät (1) zur Herstellung von einem aufgegossenen Getränk nach einem der Ansprüche 2 bis 5, **dadurch gekennzeichnet, dass** der mindestens eine Kanal zur Führung (24) einen Auslass (24a) aufweist, der mit einer Tülle (8) in Verbindung steht.

7. Gerät (1) zur Herstellung von einem aufgegossenen Getränk nach einem der vorhergehenden Ansprüche, **dadurch gekennzeichnet, dass** ein Rastsystem zwischen dem Deckel (5) und der Mischkammer (3) angeordnet ist, wobei das Rastsystem konfiguriert ist, den Deckel von der Mischkammer abnehmbar zu montieren.

8. Gerät (1) zur Herstellung von einem aufgegossenen Getränk nach einem der vorhergehenden Ansprüche, **dadurch gekennzeichnet, dass** die Kanne (2) eine im oberen Teil angeordnete Hauptöffnung (7) umfasst, wobei der Deckel (5) so konfiguriert ist, dass er auch diese Hauptöffnung verschließt.

9. Gerät (1) zur Herstellung von einem aufgegossenen Getränk nach Anspruch 8, **dadurch gekennzeichnet, dass** ein Montagesystem (21a, 21b, 22a, 22b) zwischen dem Deckel (5) und der Hauptöffnung (7) der Kanne (2) angeordnet ist, wobei das Montagesystem so konfiguriert ist, dass es eingefahren werden kann.

10. Gerät (1) zur Herstellung von einem aufgegossenen Getränk nach einem der Ansprüche 1 bis 9, **dadurch gekennzeichnet, dass** die Heizvorrichtung (4) in der Kanne (2) integriert ist und mit dieser in Verbindung steht, wobei die Kanne anfänglich einen Wassertank darstellt.

11. Gerät (1) zur Herstellung von einem aufgegossenen Getränk nach Anspruch 10, **dadurch gekennzeichnet, dass** die Heizvorrichtung (4) eine Säule (12) zum Aufsteigen der erhitzten Flüssigkeit umfasst, und dass die Mischkammer (3) einen Filterbehälter (14) umfasst, der mit einem Boden (14a) versehen ist, wobei die Säule dicht durch den Boden läuft und ihr oberes Ende (12b) hat, das im oberen Teil des Behälters positioniert ist.

## Claims

1. Apparatus (1) for producing an infused beverage comprising a carafe (2) configured to contain at least one infused beverage, a mixing chamber (3) configured to contain a product to be infused and to allow the infused beverage to flow into the carafe (2) and a heating device (4) configured to inject a liquid into the mixing chamber (3) after having heated same, **characterised in that** said apparatus (1) comprises a steam-recovery device configured to discharge the steam contained in the mixing chamber (3) above the product to be infused and to inject said steam into the carafe (2) without said steam passing through the product to be infused and **in that** the steam-recovery device is constituted of a lid (5) configured to close the mixing chamber (3), the lid comprising at least one channel (24) to guide the steam, said at least one steam guiding channel having at least one inlet (25a, 25b, 25c, 25d) configured to communicate with the mixing chamber (3) and at least one outlet (24a) configured to communicate with the carafe (2).

2. Apparatus (1) for producing an infused beverage according to claim 1, **characterised in that** the carafe (2) comprises a pouring spout (8), the steam-recovery device being configured to inject the steam into the carafe (2) by said pouring spout (8).

3. Apparatus (1) for producing an infused beverage according to one of claims 1 or 2, **characterised in that** the steam-recovery device comprises an adjusting system (26, 27, 28) configured to control the amount of steam injected into the carafe (2).

4. Apparatus (1) for producing an infused beverage according to claim 3 **characterised in that** the steam-recovery device comprises an adjusting system (26, 27, 28) configured to control the amount of steam injected into the carafe (2) and **in that** the adjusting system (26, 27, 28) is arranged on the at least one steam guiding channel (24).

5. Apparatus (1) for producing an infused beverage according to claim 4, **characterised in that** the adjusting system comprises an opening (26) arranged on the at least one steam guiding channel (24) and configured to open on the outside, a stopper (27) configured to close the opening and some means of adjusting (28) the position of the stopper with regards to the opening configured to close the said opening to a certain extent.

6. Apparatus (1) for producing an infused beverage according to any one of claims 2 to 5, **characterised in** the at least one guiding channel (24) has an outlet (24a) which communicates with a pouring spout (8).

7. Apparatus (1) for producing an infused beverage according to one of the preceding claims, **characterised in that** a clicking system is arranged between the lid (5) and the mixing chamber (3), said clicking system being configured to assemble in a removable way the lid with the mixing chamber.

8. Apparatus (1) for producing an infused beverage according to one of the preceding claims, **characterised in that** the carafe (2) comprises a principal opening (7) arranged at the upper part, the lid (5) being configured to also obstruct said principal opening.

9. Apparatus (1) for producing an infused beverage according to claim 8, **characterised in that** an assembly system (21a, 21b, 22a, 22b) is arranged between the lid (5) and the principal opening (7) of the carafe (2), said assembly system being configured to be retracted.

10. Apparatus (1) for producing an infused beverage according to one of claims 1 to 9, **characterised in that** the heating device (4) is integrated with the carafe (2) and communicates with same, said carafe initially constituting a water tank.

11. Apparatus (1) for producing an infused beverage according to claim 10, **characterised in that** the heating device (4) comprises a column (12) for taking up the heated liquid, and the mixing chamber (3) comprises a filtering container (14) equipped with a bottom (14a), said column passing through the bottom in a sealed manner and having its upper end (12b) positioned at the upper part of the container.
